# FASCICULE DE BREVET EUROPEEN

(11) **EP 1 787 465 B1**
(45) Date de publication et mention de la délivrance du brevet: **22.02.2017**
(21) Numéro de dépôt: 05795936.3
(22) Date de dépôt: 11.08.2005
(51) Int. Cl.: H04N 5/232, G06T 7/00, G08G 1/04

(54) **PROCEDE ET DISPOSITIF POUR STABILISER LES IMAGES DONNEES PAR UNE CAMERA VIDEO**
VERFAHREN UND VORRICHTUNG ZUR STABILISIERUNG VON ÜBER EINE VIDEOKAMERA BEREITGESTELLTEN BILDERN
METHOD AND DEVICE FOR STABILISING IMAGES SUPPLIED BY A VIDEO CAMERA

(30) Priorité: 08.09.2004 FR 0409480
(43) Date de publication de la demande: 23.05.2007
(73) Titulaire: Citilog, 94110 Arcueil (FR)
(72) Inventeur: BOUZAR, Salah, F-92330 Sceaux (FR)
(74) Mandataire: Nguyen Van Yen, Christian
(86) Numéro de dépôt international: PCT/FR2005/002071
(87) Numéro de publication internationale: WO 2006/030080

(56) Documents cités:
- US-A- 5 847 755
- MARCENARO L ET AL: "Image stabilization algorithms for video-surveillance applications" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 octobre 2001 (2001-10-07), pages 349-352, XP010564868 ISBN: 0-7803-6725-1
- PATENT ABSTRACTS OF JAPAN vol. 2002, no. 12, 12 décembre 2002 (2002-12-12) -& JP 2002 218444 A (TOSHIBA CORP), 2 août 2002 (2002-08-02)

## Description

La présente invention concerne les procédés pour stabiliser les images obtenues par une caméra vidéo, d'un environnement auquel est lié un référentiel spatial donné dans lequel peuvent se déplacer des objets sur des voies préférentielles, notamment dans une application particulièrement avantageuse pour le contrôle, sous toutes ses formes, du trafic routier, par exemple le contrôle de la vitesse des véhicules et/ou de l'espacement entre ces véhicules, mais aussi la détection d'incidents, d'accidents, etc..

Les caméras qui visualisent le trafic routier sont généralement fixées sur des mâts. Les mâts le plus souvent utilisés sont ceux qui sont prévus pour l'éclairage public ou des pylônes d'émissions radiophoniques ou analogues. Des supports en béton solidaires des ouvrages à surveiller sont aussi utilisés, etc.

Dans tous les cas, ces supports peuvent subir plusieurs types de déformation qui peuvent modifier l'orientation du champ de vision des caméras. L'expérience montre que deux types de déformation sont le plus souvent rencontrés, notamment en milieu routier : déformation due au gradient thermique et déformation due aux vibrations.

Plus particulièrement lorsque le mât est en un matériau métallique, il se produit un gradient thermique important entre ses deux faces lorsque l'une d'elle est chauffée par le soleil, et donc un couple de torsion entre ces deux faces qui induit une déformation du mât consistant en une rotation de son sommet par rapport au pied, d'où un déplacement, cependant très lent, de la caméra.

En revanche, les vibrations provoquées par des facteurs tels que le vent ou le passage des véhicules sur l'ouvrage, en particulier un viaduc, un pont, etc., induisent des déplacements très rapides de l'axe de visée de la caméra.

Or, les algorithmes de détection d'incidents ou de mesure de trafic, connus en eux-mêmes, travaillent sur les images provenant de caméras qui sont supposées fixes, c'est-à-dire avec un positionnement permanent dans un référentiel donné. Leur principe de fonctionnement consiste essentiellement à réaliser des mesures sur les objets en mouvement tels que les véhicules dans un fond de scène fixe telle que par exemple une route et à analyser le résultat de ces mesures pour générer divers ordres ou alarmes.

La Demanderesse commercialise d'ailleurs, depuis longtemps, des produits basés sur de tels algorithmes, par exemple le produit portant la référence commerciale "MEDIA ROAD, MEDIA TUNNEL".

Ces algorithmes travaillent en étapes successives, qui sont essentiellement les suivantes :
- construction dynamique d'une image de référence moyenne des objets fixes,
- comparaison de cette image avec l'image courante pour trouver les objets en mouvement, et
- analyse de ces objets pour mesurer leur vitesse, leur déplacement, leur densité, etc.

La première étape consiste à ne conserver, dans l'image, que les objets fixes (route, arbres, immeubles, panneaux, etc.). Toutes les mesures réalisées ensuite sont basées sur cette image. C'est ainsi qu'une erreur lors de la réalisation de cette image peut avoir des conséquences sur la précision du résultat recherché qui peuvent se révéler très graves dans le cas de la mesure d'un trafic routier, notamment l'émission d'une fausse alarme ou la non détection d'un incident.

Une telle erreur est souvent causée par les vibrations auxquelles est soumise la caméra et qui ont pour conséquence de déstabiliser le traitement des images, en considérant ces images comme fixes alors qu'elles ne l'étaient pas. Il est donc bien évident que, si aucune compensation des vibrations n'est réalisée, les risques encourus pour la détection vidéo automatique d'incidents et autres sont nombreux, notamment :
- gêne pour l'exploitant du réseau routier qui doit surveiller le trafic sur son réseau au niveau de la visualisation des séquences d'images, surtout si ces images sont compressées. Il est alors constaté une perte en qualité non négligeable.
- diminution du taux de détection d'incidents ou analogues et augmentation du taux de fausses alarmes.
- augmentation du nombre d'erreurs systématiques inhérentes à tout système de mesure.

Il faut donc chercher à maintenir l'image fixe en entrée de la chaîne d'analyse automatique des images.

Au moins deux solutions sont déjà connues.

La première consiste à annuler l'effet des vibrations au moyen d'un système mécanique intégré à la caméra. De tels dispositifs sont très rares dans le commerce et fort onéreux.

La seconde consiste à traiter l'image en sortie de la caméra. L'image transmise par la caméra est corrigée, dans un premier temps, par un algorithme qui la stabilise pour annuler l'effet vibratoire, puis analysée par les algorithmes habituels Mais les procédés de correction actuellement connus sont très peu utilisés car très complexes et entraînant des coûts de revient trop importants, notamment en matériel "processeur-mémoires", pour qu'ils soient industriellement exploitables.

De plus, les procédés déjà connus pour stabiliser une image ne sont en fait applicables que lorsque la caméra est soumise à des vibrations, ou plutôt des pseudo instabilités, volontaires qui sont par exemple dues aux variations de focalisation lors d'un effet de zoom ou à des rotations de la caméra pour viser un point plus particulier de l'environnement à contrôler.

Pour corriger ces pseudos instabilités, le procédé consiste essentiellement en un calibrage manuel en choisissant l'adresse d'un point fixe directement dans l'image correspondant par exemple à un point objet appartenant à un immeuble. Cette adresse est alors stockée et utilisée pour arriver à stabiliser les images, mais à la condition que la caméra soit fixe et ne soit pas soumise à des changements de focalisation ou d'orientation volontaires ou non.

Ce procédé est en revanche impossible à mettre en oeuvre quand la caméra est soumise à des vibrations oscillatoires comme celles décrites cidessus.

Deux documents de l'art antérieur, l'article de Marcenaro et alii intitulé "Image Stabilization Algorithms for Video Surveillance Applications" (Proceedings 2001, International Conference on Image Processing, ICIP 2001, IEEE, US, vol 1, Of 3, Conf 8, 7/10/2001) et le brevet US 5,847,755, divulguent des procédés de stabilisation qui seraient applicables lorsque la caméra est soumise à de telles vibrations oscillatoires. Cependant ces procédés de l'art antérieur ne permettent pas de reconstruire la scène à traiter dans un référentiel fixe par des transformations simples qui ne soient pas trop exigeantes en capacités de traitement informatique et qui puissent donc être embarquées sur la caméra.

La présente *invention* a donc pour but de mettre en oeuvre un procédé pour stabiliser les images obtenues sur la cible focale d'une caméra vidéo, d'un environnement auquel est lié un référentiel spatial donné dans lequel peuvent se
déplacer des objets sur des voies préférentielles, qui pallie en grande partie les inconvénients mentionnés ci-dessus des procédés de l'art antérieur.

Plus précisément, la présente invention a pour objet un procédé pour stabiliser les images obtenues par une caméra vidéo commandable, d'un environnement auquel est lié un référentiel spatial donné dans lequel peuvent se déplacer des objets sur des voies préférentielles, caractérisé par le fait qu'il consiste :

### • Dans une première phase :

- à déterminer, dans des premières pages relativement stables obtenues par la caméra commandable, des premières parties correspondant aux voies préférentielles de déplacement des dits objets, puis
- à déterminer, dans ces dites premières pages images, par un processus différentiel, les secondes parties restantes complémentaires des premières parties, et ensuite
- à déterminer, dans ces secondes parties restantes, la position référence du point image correspondant à un premier point objet fixe appartenant au dit environnement, ledit premier point objet fixe ayant une luminosité différente de celle de la zone d'environnement qui l'entoure, et

### • Dans une seconde phase suivant la première,

- à déterminer, dans au moins une seconde image prise par la caméra commandable après lesdites premières images, le vecteur correspondant au déplacement du dit point image par rapport à sa position de référence déterminée par les dites premières images, et
- à traiter la seconde image en sortie de la caméra commandable en fonction du module et de la direction du dit vecteur de façon que, par rapport au dit référentiel spatial lié à l'environnement, ledit point image reprenne sa position de référence.

D'autres caractéristiques et avantages de l'invention apparaîtront au cours de la description suivante donnée en regard des dessins annexés à titre illustratif mais nullement limitatif, dans lesquels :
La figure 1 représente un schéma permettant d'expliciter le procédé selon l'invention, illustrant à titre d'exemple une caméra vidéo commandable située au sommet d'un mât et surveillant un environnement dans lequel peuvent se déplacer des objets comme des véhicules automobiles ou analogues sur des voies de circulation ;
La figure 2 représente, sous forme très schématique, les problèmes qui peuvent se poser avec une caméra vidéo commandable située au sommet d'un mât et qui peuvent être résolus par la mise en oeuvre du procédé selon l'invention ;
Les figures 3 à 5 représentent respectivement trois vues successives de l'environnement selon la figure 1 obtenues en sortie de la caméra vidéo commandable permettant d'expliciter différentes étapes du procédé, et
La figure 6 représente le schéma de principe d'un dispositif permettant de mettre en oeuvre le procédé selon l'invention.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est en outre précisé que, lorsque, selon la définition de l'invention, l'objet de l'invention comporte "au moins un" élément ayant une fonction donnée, le mode de réalisation décrit peut comporter plusieurs de ces éléments. Réciproquement, si les modes de réalisation de l'objet selon l'invention tel qu'illustrés comportent plusieurs éléments de fonction identique et si, dans la description, il n'est pas spécifié que l'objet selon cette invention doit obligatoirement comporter un nombre particulier de ces éléments, l'objet de l'invention pourra être défini comme comportant "au moins un" de ces éléments.

Il est enfin précisé que lorsque, dans la présente description, une expression définit à elle seule, sans mention particulière spécifique la concernant, un ensemble de caractéristiques structurelles, [par exemple ∑ = ∑(ρ, τ, ε, ...)], ces caractéristiques peuvent être prises, pour la définition de l'objet de la protection demandée, quand cela est techniquement possible, soit séparément, [par exemple ε, et/ou τ, et/ou ρ, ...], soit en combinaison totale et/ou partielle, [par exemple ∑(ε, τ, ρ), et/ou ∑(ε, τ), et/ou ∑(τ, ρ), et/ou ∑(ε, ρ)].

Comme mentionné ci-dessus au préambule de la présente description, il existe des systèmes de surveillance du trafic de véhicules au moyen de caméras vidéo commandables. Un tel type de caméra est bien connu en lui-même et ne sera pas plus amplement décrit ici dans l'unique souci de simplifier la présente description.

Ces systèmes de surveillance sont essentiellement basés sur le traitement d'images au moyen d'algorithmes spécifiques. La Demanderesse en commercialise déjà, par exemple celui qui est connu sous la référence commerciale "MEDIA ROAD, MEDIA TUNNEL".

Ces systèmes permettent de détecter automatiquement, sur des voies de circulation, notamment des incidents ou des accidents et d'en tirer toutes les conséquences, notamment en vue de diminuer par exemple le temps d'intervention, en particulier pour les secours. Ils permettent de réaliser d'autres fonctions, par exemple la vérification de la vitesse des véhicules, des intervalles entre ces véhicules, la détection de bouchons, etc..

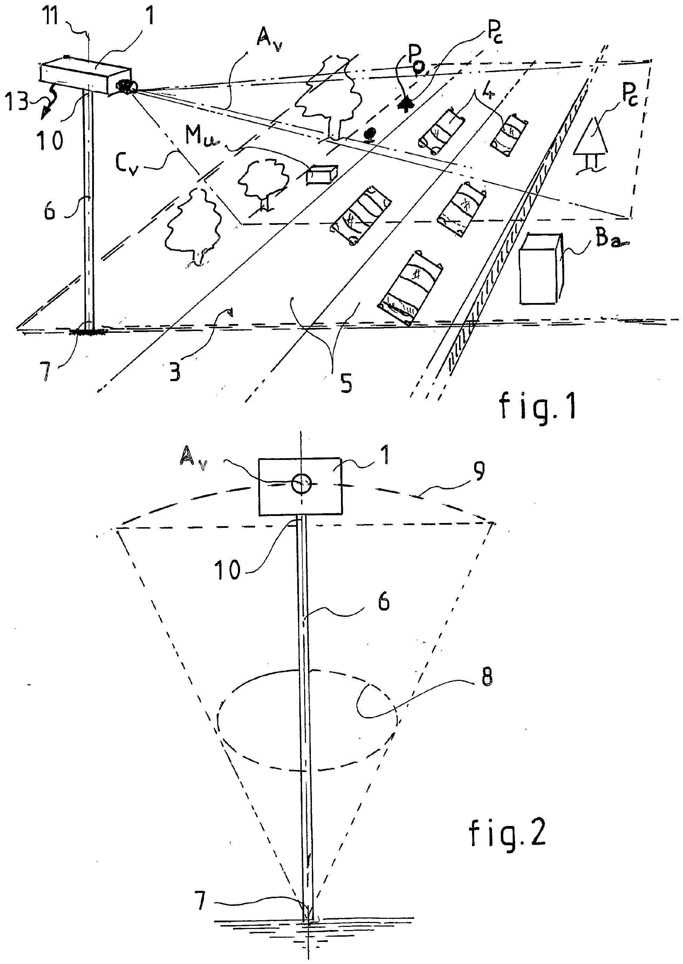

D'une façon générale, comme illustré sur la figure 1, pour réaliser ces fonctions, le champ de vision Cᵥ d'une telle caméra commandable doit pouvoir englober un environnement d'une aire relativement importante, afin de recouvrir toute la zone de circulation à contrôler et même, par sécurité, de déborder de part et d'autre de celle-ci.

La figure 1 représente une caméra commandable 1 dont le champ de vision Cᵥ permet de filmer une partie d'un environnement 3 dans lequel peuvent se déplacer des objets 4, comme des véhicules automobiles ou analogues, sur des voies de circulation 5. Pour que la caméra 1 puisse filmer correctement une aire relativement grande d'un tel environnement 3 et que les images qu'elle donne soient exploitables, elle est généralement disposée au sommet d'un mât 6 pour surplomber l'environnement 3, ce mât pouvant avoir une hauteur d'une dizaine de mètres et plus, comme ceux qui sont situés sur le bord d'une autoroute ou analogue.

Ces mâts sont le plus souvent conçus spécialement pour supporter une telle caméra, c'est-à-dire les plus rigides possible. Mais, d'une façon générale, pour minimiser les coûts, les mâts utilisés sont des poteaux préexistants, par exemple comme ceux qui supportent des éclairages publics ou analogues.

Cependant, quelle que soit la structure de ces mâts, ils sont tous soumis à des vibrations, par exemple à cause du passage de véhicules lourds et/ou de rafales de vent, et à des déformations.

La figure 2 représente, sous forme très schématique, un tel mât 6 portant en son sommet une caméra commandable 1. Un tel mât peut être soumis à des rotations oscillantes, dénommées ci-après vibrations, dont le centre peut être considéré comme sensiblement situé au pied 7 du mât 6 et comprises dans un cône d'angle au sommet solide 8. De ce fait, la caméra commandable 1 peut se déplacer sur une calotte sphérique 9 sensiblement centrée au pied 7 du mât.

Il est tout d'abord à remarquer, sur cette figure, que l'amplitude 8 de la vibration du mât 6 par rapport à sa longueur a été fortement exagérée dans le seul but de bien faire ressortir les inconvénients d'une caméra située au sommet 10 d'un tel mât 6 et les déplacements auxquels elle peut être soumise.

Dans ces conditions, la caméra peut donc, par rapport à l'environnement 3 qu'elle doit filmer, subir des déplacements aléatoires qui peuvent être décomposés et déterminés tout d'abord comme deux rotations sensiblement autour du pied 7, respectivement dans deux plans orthogonaux, l'un contenant sensiblement l'axe de visée Aₓ de la caméra (ou axe optique), c'est-à-dire une rotation perpendiculaire au plan de la figure, et l'autre étant sensiblement perpendiculaire à cet axe de visée, c'est-à-dire une rotation dans le plan de la figure.

Etant donné en outre que l'amplitude 8 de la vibration est relativement faible par rapport à la longueur du mât 6, la calotte sphérique 9 peut être assimilée à son plan tangent au sommet 10 du mât.

Il existe une troisième rotation possible, celle autour de l'axe 11 du mât 6. Cependant, dans la pratique, cette troisième rotation est relativement peu fréquente et presque inexistante car la prise au vent de la caméra est du même ordre de grandeur que celle du mât. Elle peut donc être négligée par rapport aux deux autres rotations.

Enfin, la caméra peut être soumise à un quatrième déplacement, à savoir une translation suivant l'axe 11 du mât 6, causée par exemple par les dilatations thermiques. Ces variations sont lentes par rapport aux autres, bien que non négligeables.

Dans ces conditions, lorsque le mât est soumis à des rotations oscillantes aléatoires, sachant que l'environnement 3 est fixe et que c'est la caméra qui se déplace par rapport à lui et donc par rapport au référentiel qui lui est lié, comme par exemple, sur Terre, un référentiel de Galilée, la caméra commandable délivre des images qui changent puisque son axe de visée se déplace par rapport à l'environnement, ce changement pouvant être assimilé à un déplacement par rapport à la caméra.

Ainsi, lorsque la caméra se déplace dans le plan perpendiculaire à son axe de visée et/ou suivant l'axe 11 du mât, le déplacement des images qu'elle délivre peut être assimilé, comme démontré ci-dessus, à une translation.

En revanche, quand la caméra se déplace dans un plan contenant son axe de visée, les images subissent ce que les techniciens appellent un effet de "zoom" ou, de façon mathématique, une homothétie. Dans ce cas, sachant que les objets filmés par une telle caméra peuvent être optiquement considérés comme situés à l'infini, l'effet de "zoom" sur les images formées par la caméra, pour une amplitude 8 de rotation oscillante du mât 6, a très peu d'influence sur la dimension des images. En général, ce type de déformation peut donc être négligé et les images considérées comme stables.

De ce qui vient d'être démontré ci-dessus, il ressort que l'instabilité des images données par une caméra vidéo commandable 1 située au sommet 10 d'un mât 6 est essentiellement, et uniquement, due à une rotation assimilable à une translation de la caméra dans un plan sensiblement perpendiculaire à son axe de visée ou optique Aᵥ.

En conséquence, comme la détection des incidents ou des accidents sur une voie de circulation est basée sur l'analyse d'images en sortie de caméra et que, pour que cette détection soit fiable, il faut que ces images soient les plus stables possible, le but de l'invention est de mettre en oeuvre un procédé pour stabiliser automatiquement les images données en sortie de la caméra vidéo commandable lorsqu'elle est soumise à des rotations oscillantes ou vibrations et/ou des translations comme explicité ci-dessus, avant l'entrée de la chaîne d'analyse automatique de ces images.

Le procédé selon l'invention permet de stabiliser les images obtenues par une caméra vidéo commandable 1, d'un environnement 3 auquel est lié un référentiel spatial donné, par exemple celui de Galilée, dans lequel peuvent se déplacer des objets 4 comme des véhicules automobiles ou analogues sur des voies préférentielles 5.

Le procédé consiste, dans une première phase, à déterminer, dans des premières images relativement stables de l'environnement 3 obtenues par la caméra 1, des premières parties 21 correspondant aux voies préférentielles 5 de déplacement des dits objets, par exemple des véhicules automobiles 4, puis à déterminer, dans ces premières images, par un processus différentiel bien connu en lui-même des hommes du métier, les secondes parties restantes 22 complémentaires des premières parties 21, et ensuite à déterminer, dans ces secondes parties restantes 22, la position référence du point image Pᵢ correspondant à un premier point objet fixe Pₒ appartenant à l'environnement 3, mais situé en dehors des voies préférentielles de déplacement 5 des objets 4, ce premier point objet fixe Pₒ ayant une luminosité différente de celle de la zone de l'environnement 3 qui l'entoure.

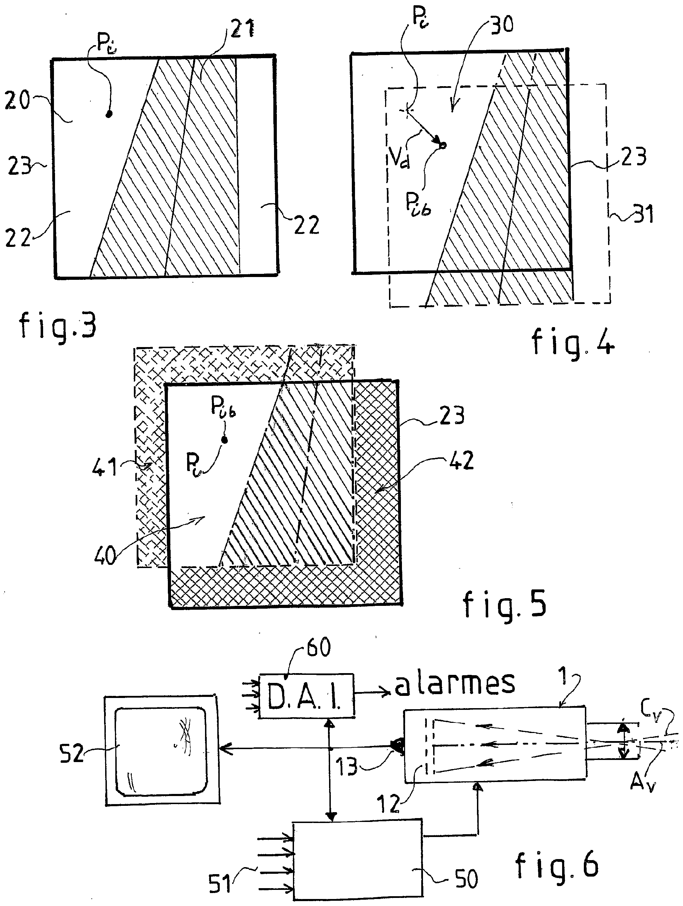

A titre d'exemple illustratif, la figure 3 représente une 20 des premières images prises par la caméra fixe 1, de l'environnement 3 qui est illustré schématiquement sur la figure 1. Cette représentation est par exemple celle qui pourrait être vue sur un écran vidéo dont le contour 23 est représenté en traits continus épais et envoyée à l'entrée d'une chaîne d'analyse automatique d'images représentée schématiquement en 60 sur la figure 6 décrite ci-après.

Le point objet fixe Pₒ peut par exemple être un panneau de circulation ou publicitaire Pc, ou une partie de celui-ci comme représenté schématiquement sur la figure 1, ou une portion d'un muret Mu, d'un bâtiment Ba, etc., qui par définition présentent généralement une luminosité différente de la zone d'environnement qui les entoure.

Cependant, de façon préférentielle, le point objet fixe Pₒ est choisi, quand cela est possible, sur la ligne d'horizon car il est presque certain alors qu'il soit fixe en apparence dans l'image de la caméra et qu'il présente sans aucun doute une luminosité différente de celle de la zone d'environnement qui l'entoure.

Le procédé consiste ensuite, dans une seconde phase suivant la première, à déterminer, dans au moins une seconde image 30 prise après les premières images 20 lorsque la caméra commandable 1 est susceptible d'être soumise à des vibrations, le vecteur V_{d} correspondant au déplacement du point image P_{ib} par rapport à sa position de référence Pᵢ déterminée avec les premières images 20 qui est mise en mémoire à la fin de la première phase, et à traiter, par asservissement, la seconde image 30 en sortie 13 de la caméra, en fonction du module et de la direction du vecteur V_{d}, de façon que, par rapport au référentiel spatial lié à l'environnement 3, le point image P_{ib} reprenne sa position de référence Pₗ et que l'image 30 ainsi traitée donne en final une image 40 fixe par rapport au référentiel lié à l'environnement 3, c'est-à-dire pour obtenir d'une façon générale des images stabilisées avant d'être envoyées à l'entrée de la chaîne 60 d'analyse automatique d'images.

Ce traitement par asservissement du signal délivré par la caméra 1 peut se faire au moyen d'un organe de traitement électronique qui peut être intégré dans le boîtier de la caméra ou, de façon préférentielle, dans le boîtier et en entrée du système de surveillance par exemple du type comme celui qui est mentionné auparavant. En fait, cet organe de traitement peut être un ordinateur programmé.

A titre d'exemple illustratif, la figure 4 représente une seconde image 30 de l'environnement 3 selon la figure 1, prise par la caméra 1 supposée ayant subi un déplacement comme défini ci-avant. Cette représentation est par exemple celle qui pourrait être vue sur un écran vidéo dont le contour 23 est toujours représenté en traits continus épais et qui serait, sans la correction obtenue par le procédé selon l'invention, envoyée à l'entrée de la chaîne d'analyse d'images comme mentionné auparavant.

Le contour 31 en traits interrompus sur cette même figure 4 représente en fait l'image que la caméra aurait dû délivrer à sa sortie 13, si elle n'avait subi de déplacement vibratoire parasite.

Sur la figure 5, est représentée une image finale 40 obtenue en sortie 13 de la caméra commandable 1 après le traitement de la seconde image 30 et telle qu'elle pourrait être vue sur l'écran vidéo dont le contour 23 est toujours représenté en traits continus épais.

Cette image finale 40 correspond à l'image 30 selon la figure 4 qui a été traitée selon le procédé défini ci-dessus, c'est-à-dire qui a subi de façon asservie un "déplacement relatif correcteur" suivant un vecteur opposé au vecteur V_{d} défini ci-dessus, ce qui permet de replacer le point image P_{ib} selon l'image 30 à l'endroit de référence Pᵢ (figures 3 et 5) où il aurait dû se trouver si la caméra n'avait pas subi de vibration.

Il est alors évident que, suite à cette translation, l'image finale 40 en sortie de la caméra commandable 1 a, par rapport à la première image 20 (figure 3), perdu une partie de sa surface, à savoir la partie 41 "hachurée-croisée en traits interrompus", et que, de plus, il y manque une partie, en l'occurrence la partie 42 "hachurée-croisée en traits continus", qui, par exemple sur l'écran vidéo, apparaît généralement en noir ou analogue, ce qui est la caractéristique d'une absence d'une partie d'image.

Bien entendu, sur cette figure 5, l'amplitude du déplacement relatif correcteur de l'image prise par une caméra quand celle-ci subit une vibration et les aires des deux parties de surfaces perdue et absente 41, 42 ont été fortement exagérées, dans le but uniquement de mieux faire ressortir le résultat obtenu par la mise en oeuvre de la dernière étape de la seconde phase du procédé selon l'invention.

En fait, ces parties de surfaces 41, 42 n'ont pas des aires assez importantes pour gêner le traitement des images selon les procédés connus de l'art antérieur pour, par exemple, la détection d'incidents où d'accidents sur des voies de circulation, comme celui mis en oeuvre dans le produit déjà commercialisé par la Demanderesse sous la référence "MEDIA ROAD, DAI".

Il est à noter que la seconde image 30 fait partie des images qui sont prises par la caméra dès que toutes les opérations prévues dans la première phase du procédé ont été accomplies, car les vibrations peuvent intervenir à tout instant, et il est nécessaire de corriger, à tout instant, les images données par la caméra.

La figure 6 représente, sous forme très schématique, le dispositif permettant de mettre en oeuvre le procédé selon l'invention.

Il comprend essentiellement :
- des moyens pour déterminer, dans des premières images relativement stables obtenues par la caméra commandable 1, des premières parties correspondant aux voies préférentielles de déplacement des objets,
- des moyens pour déterminer, dans ces premières images, par un processus différentiel, les secondes parties restantes complémentaires des premières parties,
- des moyens pour déterminer, dans ces secondes parties restantes, la position référence du point image correspondant à un premier point objet fixe appartenant à l'environnement, ce premier point objet fixe ayant une luminosité différente de celle de la zone d'environnement qui l'entoure,
- des moyens pour déterminer, dans au moins une seconde image prise par la caméra commandable après les premières images, le vecteur correspondant au déplacement du point image par rapport à sa position de référence déterminée avec les premières images, et
- des moyens pour traiter la seconde image en sortie de la caméra commandable en fonction du module et de la direction de ce vecteur de façon que, par rapport au référentiel spatial lié à l'environnement, le point image reprenne sa position de référence pour que la seconde image reste fixe.

Tous ces moyens énoncés ci-dessus sont essentiellement constitués par une unité de traitement de type informatique à microprocesseur programmable ou analogue 50 comportant de ce fait une entrée de programmation 51 pour la charger avec un logiciel d'analyse et de traitement dont l'élaboration est du domaine de l'homme du métier connaissant la description des différentes étapes du procédé selon l'invention données ci-dessus.

A ce dispositif peut éventuellement être associé un écran vidéo 52 comme évoqué ci-dessus, pour une vérification et une utilisation visuelle (utilisation par les exploitants du trafic) de la stabilité des images obtenues en sortie de la caméra 1 avec le procédé selon l'invention.

Le mode de mise en oeuvre du procédé décrit ci-dessus donne une entière et totale satisfaction par rapport au coût de sa mise oeuvre, notamment en quantité de "processeur-mémoires".

Bien entendu, si cela est nécessaire, le procédé peut comporter, en plus de celles décrites ci-dessus, les étapes supplémentaires suivantes pour tenir compte notamment de la rotation de la caméra et de l'effet de "Zoom" ou d'homothétie, comme explicité auparavant.

Dans ce cas, le procédé consiste en outre, dans la première phase, à déterminer, dans les secondes parties restantes, la position référence de deux points images correspondant à un premier et un second points objets fixes appartenant à l'environnement, ces premier et second points objets fixes ayant une luminosité différente de celle de la zone d'environnement qui les entoure, et dans la seconde phase, à déterminer, dans la seconde image prise par la caméra commandable après les premières images, d'une part le vecteur correspondant au déplacement d'au moins l'un des deux points images, et d'autre part un premier et un second paramètres représentant respectivement la variation de distance entre ces deux points images et la valeur de l'angle entre les deux droites passant par les deux points images respectivement dans les premières images et dans la seconde image, et à traiter la seconde image en sortie de la caméra commandable en fonction du module et de la direction du vecteur et des premier et second paramètres de façon que, par rapport au référentiel spatial lié à l'environnement, les deux points images reprennent leur position de référence.

Le procédé selon l'invention tel que défini ci-dessus peut être mis en oeuvre avec un dispositif comme décrit ci-avant. Pour ce faire, il suffira de charger l'unité de traitement 51 avec un autre logiciel d'analyse et de traitement tenant compte des étapes supplémentaires du procédé décrites ci-dessus.

Le procédé selon l'invention est particulièrement intéressant car il permet, avec la stabilisation des images en sortie de la caméra commandable avant de les envoyer vers une chaîne de traitement automatique d'images 60 comme celle qui est connue sous la référence DAI, d'obtenir une meilleure précision des détections d'incidents avec un minimum de "fausses alarmes", et d'éviter des erreurs de mesure, mais aussi de réaliser une compression d'images plus importante pour minimiser les coûts et ainsi améliorer encore la détection d'incidents, accidents, etc.

## Revendications

1. Procédé pour stabiliser les images obtenues par une caméra vidéo commandable (1), d'un environnement auquel est lié un référentiel spatial donné dans lequel peuvent se déplacer des objets (4) sur des voies préférentielles (5), consistant à:
• dans une première phase:
- à déterminer, dans des premières images (20) relativement stables obtenues par la caméra commandable, des premières parties (21), puis
- à déterminer, dans cesdites premières images, par un processus différentiel, les secondes parties restantes (22) complémentaires des premières parties, et ensuite
- à déterminer, dans ces secondes parties restantes (22), la position référence du point image (Pi) correspondant à un premier point objet fixe (Po) appartenant au dit environnement (3), et
• dans une seconde phase suivant la première:
- à déterminer, dans au moins une seconde image (30) prise par la caméra commandable (1) après lesdites premières images (20), le vecteur (Vd) correspondant au déplacement dudit point image par rapport à sa position de référence déterminée avec lesdites premières images, ledit procédé étant **caractérisé en ce que**
- dans la première phase, lesdites premières parties (21) correspondent aux voies préférentielles de déplacement (5) desdits objets (4) et ledit premier point objet fixe a une luminosité différente de celle de la zone d'environnement qui l'entoure,
- ladite deuxième phase comprend une étape consistant à traiter la seconde image (30) en sortie de la caméra commandable en fonction du module et de la direction du dit vecteur (Vd) de façon que, par rapport au dit référentiel spatial lié à l'environnement, ledit point image (Pi) reprenne sa position de référence.

2. Procédé selon la revendication 1, **caractérisé par le fait qu'**il consiste en outre:
• dans la première phase :
- à déterminer, dans les secondes parties restantes (22), la position référence de deux points images correspondant à un premier et un second points objets fixes appartenant à l'environnement, ces premier et second points objets fixes ayant une luminosité différente de celle de la zone d'environnement qui les entoure, et
• dans la seconde phase suivant la première:
- à déterminer, dans la seconde image (30) prise par la caméra commandable après les premières images, d'une part le vecteur correspondant au déplacement d'au moins l'un des deux points images, et d'autre part un premier et un second paramètres représentant respectivement la variation de distance entre ces deux points images et la valeur de l'angle entre les deux droites passant par les deux points images respectivement dans les premières images et dans la seconde image, et
- à traiter la seconde image en sortie de la caméra commandable en fonction du module et de la direction du vecteur et des premier et second paramètres de façon que, par rapport au référentiel spatial lié à l'environnement, les deux points images reprennent leur position de référence.

3. Procédé selon l'une des revendications 1 et 2, **caractérisé par le fait qu'**il consiste à choisir au moins l'un des deux premier et second points objets fixes situé sur la ligne d'horizon du dit environnement.

4. Dispositif permettant de mettre en oeuvre le procédé selon au moins l'une des revendications 1 à 3, comprenant:
- des moyens pour déterminer, dans des premières images (20) relativement stables obtenues par la caméra commandable (1), des premières parties (21)
- des moyens pour déterminer, dans ces premières images (20), par un processus différentiel, les secondes parties restantes (22) complémentaires des premières parties,
- des moyens pour déterminer, dans ces secondes parties restantes (22), la position référence du point image correspondant à un premier point objet fixe appartenant à l'environnement,
- des moyens pour déterminer, dans au moins une seconde image (30) prise par la caméra commandable (1) après les premières images, le vecteur (Vd) correspondant au déplacement du point image par rapport à sa position de référence déterminée avec les premières images,
ledit dispositif étant **caractérisé:**
- **en ce que** lesdites premières parties (21) correspondent aux voies préférentielles (5) de déplacement des objets (4) et ledit premier point objet fixe a une luminosité différente de celle de la zone d'environnement qui l'entoure, et,
- **en ce qu'**il comprend en outre des moyens pour traiter la seconde image (30) en sortie de la caméra commandable en fonction du module et de la direction de ce vecteur de façon que, par rapport au référentiel spatial lié à l'environnement, le point image reprenne sa position de référence.

## Patentansprüche

1. Verfahren zum Stabilisieren von über eine steuerbare Videokamera (1) aufgenommenen Bildern von einer Umgebung, mit der ein gegebenes räumliches Referenzsystem verbunden ist, in dem Objekte (4) auf bevorzugten Wegen (5) bewegbar sind, das folgende Schritte aufweist:
• in einer ersten Phase:
- Bestimmen erster Teile (21) in den ersten relativ stabilen Bildern (20), die mit der steuerbaren Kamera aufgenommen wurden, und
- Bestimmen der die ersten Teile ergänzenden übrigen zweiten Teile (22) in den ersten Bildern durch einen Differenzialprozess, und schließlich
- Bestimmen der Referenzposition des Bildpunktes (Pi) in den übrigen zweiten Teilen (22), die einem ersten Objektfixpunkt (Po) entspricht, der zu der Umgebung (3) gehört, und
• in einer auf die erste folgenden zweiten Phase:
- Bestimmen des Vektors (Vd), der der Verlagerung des Bildpunktes in Bezug auf seine mit den ersten Bildern bestimmten Referenzposition entspricht, in mindestens einem zweiten Bild (30), das nach den ersten Bildern (20) über die steuerbare Kamera (1) aufgenommen wurde,
wobei das Verfahren **dadurch gekennzeichnet ist, dass**
- in der ersten Phase die ersten Teile (21) den bevorzugten Verlagerungswegen (5) der Objekte (4) entsprechen und der erste Objektfixpunkt eine andere Helligkeit aufweist als die des sie umgebenden Umgebungsbereichs,
- die zweite Phase einen Schritt umfasst, der darin besteht, dass das zweite Bild (30) am Ausgang der steuerbaren Kamera in Abhängigkeit des Moduls und der Richtung des Vektors (Vd) so verarbeitet wird, dass der Bildpunkt (Pi) in Bezug auf das mit der Umgebung verbundene räumliche Referenzsystem wieder seine Referenzposition einnimmt.

2. Verfahren nach Anspruch 1, **dadurch gekennzeichnet, dass** es ferner folgende Schritte aufweist:
• in der ersten Phase:
- Bestimmen der Referenzposition zweier Bildpunkte in den übrigen zweiten Teilen (22), die einem ersten und einem zweiten der Umgebung zugehörigen Objektfixpunkt entsprechen, wobei diese ersten und zweiten Objektfixpunkte eine andere Helligkeit aufweisen als die des sie umgebenden Umgebungsbereichs, und
• in der auf die erste folgenden zweiten Phase:
- Bestimmen, im über die steuerbare Kamera nach den ersten Bildern aufgenommenen zweiten Bild (30), einerseits des Vektors, der der Verlagerung mindestens eines der zwei Bildpunkte entspricht, und andererseits eines ersten und eines zweiten Parameters, die jeweils die Abstandsänderung zwischen diesen zwei Bildpunkten und den Wert des Winkels zwischen den beiden Geraden darstellen, die durch die zwei Bildpunkte jeweils in den ersten Bildern und im zweiten Bild verlaufen, und
- Verarbeiten des zweiten Bildes am Ausgang der steuerbaren Kamera in Abhängigkeit des Moduls und der Richtung des Vektors (Vd) und des ersten und zweiten Parameters, so dass die zwei Bildpunkte in Bezug auf das mit der Umgebung verbundene räumliche Referenzsystem wieder ihre Referenzposition einnehmen.

3. Verfahren nach einem der Ansprüche 1 und 2, **dadurch gekennzeichnet, dass** es darin besteht, wenigstens einen der zwei auf der Horizontlinie der Umgebung liegenden ersten und zweiten Objektfixpunkte zu wählen.

4. Vorrichtung zum Durchführen des Verfahrens nach einem der Ansprüche 1 bis 3, umfassend:
- Mittel zum Bestimmen erster Teile (21) in den ersten relativ stabilen Bildern (20), die mit der steuerbaren Kamera (1) aufgenommen wurden,
- Mittel zum Bestimmen der die ersten Teile ergänzenden übrigen zweiten Teile (22) in diesen ersten Bildern (20) durch einen Differenzialprozess,
- Mittel zum Bestimmen der Referenzposition des Bildpunktes in den übrigen zweiten Teilen (22), die einem ersten Objektfixpunkt entspricht, der zu der Umgebung gehört, und
- Mittel zum Bestimmen des Vektors (Vd), der der Verlagerung des Bildpunktes in Bezug auf seine mit den ersten Bildern bestimmten Referenzposition entspricht, in mindestens einem zweiten Bild (30), das nach den ersten Bildern über die steuerbare Kamera (1) aufgenommen wurde,
wobei die Vorrichtung **dadurch gekennzeichnet ist, dass**
- die ersten Teile (21) den bevorzugten Verlagerungswegen (5) der Objekte (4) entsprechen und der erste Objektfixpunkt eine andere Helligkeit aufweist als die des sie umgebenden Umgebungsbereichs, und
- es ferner Mittel zum Verarbeiten des zweiten Bildes (30) am Ausgang der steuerbaren Kamera in Abhängigkeit des Moduls und der Richtung des Vektors (Vd) umfasst, so dass der Bildpunkt in Bezug auf das mit der Umgebung verbundene räumliche Referenzsystem wieder seine Referenzposition einnimmt.

## Claims

1. A method of stabilising the images obtained by a controllable video camera (1) of an environment that has a given spatial frame of reference associated therewith in which objects (4) can move on preferred lanes (5), consisting:
• in a first phase:
- in determining, in relatively stable first images (20) obtained by the controllable camera, first portions (21), then
- in determining, in said first images, by a differential process, the remaining second portions (22) that are complementary to the first portions, and then
- in determining, in these remaining second portions (22), the reference position of the image point (Pi) corresponding to a first stationary object point (Po) belonging to said environment (3), and
• in a second phase following the first:
- in determining, in at least one second image (30) taken by the controllable camera (1) after said first images (20), the vector (Vd) corresponding to the movement of said image point relative to its reference position determined with said first images,
said process being **characterised in that**
- in the first phase, said first portions (21) correspond to the preferred movement lanes (5) for said objects (4) and said first stationary object point has a brightness different from that of the zone of the environment that surrounds it,
- said second phase comprises a step consisting in processing the second image (30) output by the controllable camera as a function of the modulus and the direction of said vector (Vd) in such a manner that, relative to said spatial frame of reference associated with the environment, said image point (Pi) returns to its reference position.

2. The method according to Claim 1, **characterised by** the fact that it further consists:
• in the first phase:
- in determining, in the remaining second portions (22), the reference position of two image points corresponding to a first and a second stationary object point belonging to the environment, these first and second stationary object points having a brightness different from that of the zone of the environment that surrounds them, and
• in the second phase following the first:
- in determining, in the second image (30) taken by the controllable camera after the first images, on the one hand the vector corresponding to the movement of at least one of the two image points, and on the other hand a first and a second parameter representing respectively the variation in the distance between these two image points and the value of the angle between the two straight lines passing through the two image points respectively in the first images and in the second image, and
- in processing the second image output by the controllable camera as a function of the modulus and the direction of the vector and of the first and second parameters so that relative to the spatial frame of reference associated with the environment, both image points return to their reference positions.

3. The method according to either of Claims 1 and 2, **characterised in that** it consists in selecting at least one of the two first and second stationary object points situated on the horizon line of said environment.

4. A device enabling the method according to at least one of Claims 1 to 3 to be implemented, comprising:
- means for determining, in relatively stable first images (20) obtained by the controllable camera (1), first portions (12),
- means for determining, in these first images (20), by a differential process, the remaining second portions (22) that are complementary to the first portions,
- means for determining, in these remaining second portions (22), the reference position of the image point corresponding to a first stationary object point belonging to the environment,
- means for determining, in at least one second image (30) taken by the controllable camera (1) after the first images, the vector (Vd) that corresponds to the movement of the image point relative to its reference position determined with the first images, and
said device being **characterised:**
- **in that** said first portions (21) correspond to the preferred movement lanes (5) for the objects (4) and said first stationary object point has a brightness different from that of the zone of the environment that surrounds it, and
- **in that** it further comprises means for processing the second image (30) output by the controllable camera as a function of the modulus and the direction of this vector in such a manner that relative to the spatial frame of reference associated with the environment, the image point returns to its reference position.
